# EUROPEAN PATENT APPLICATION

(11) **EP 2 522 412 A1**
(43) Date of publication of application: **14.11.2012**
(21) Application number: 12152874.9
(22) Date of filing: 27.01.2012
(51) Int. Cl.: B01D 29/15, B01D 35/30

(54) **Filter with filter mount**

(30) Priority: 10.05.2011 US 201161484333 P
(71) Applicant: Parker-Hannifin Corporation, Cleveland, Ohio 44124-4141 (US)
(72) Inventor: Trott, John, Saline Michigan MI 48716 (US)
(74) Representative: Belcher, Simon James

(57) **Abstract**

A filter assembly (10) includes a canister (12) with an open end (18), a filter element (30) located within the canister (12), and an annular mount (60) for attaching the canister (12) to a manifold (100). The mount (60) has a central flow passage (64), at least one flow passage (66) disposed radially outward and fluidly separate from the central flow passage (64), and one or more through-bores (80) between the central flow passage (64) and the periphery of the mount (60) receiving a plurality of threaded fasteners (84) for attaching the mount (60) to a surface (102) of a manifold (100). An annular first seal (72) is located around the central flow passage (64) and an annular second seal (74) is located around the periphery of the mount (60). The seals fluidly seal the mount (60) to the manifold (100). The mount (60) includes a peripheral threaded portion (94) for cooperating with corresponding threads (20) on the canister (12) for enabling the canister (12) to be removably attached to the mount (60).

## Description

The present invention comprises a filter assembly and components thereof, for attaching a cartridge style filter element and canister to a manifold.

Currently many manifolds are machined to accept a filter bowl directly. For example, the bowl can be attached directly by a series of screws to the underside of the manifold. Flow passages are formed, sometimes intricately, in the exposed surface of the manifold to port the fluid into and out of the filter. A filter element is located within the bowl, and the bowl is then secured directly on to the manifold. US-2387368, US-2381354 and US-2406308 show some of the complicated machining and forming that has been done in the past to properly receive and support the bowl and media material, and route the fluid within the manifold.

According to one aspect of the present invention there is provided a filter assembly, comprising:
(i) a canister with an open end, (ii) a filter element located within the canister having a central cavity, and (iii) a manifold mount for attaching the canister to a manifold; in which the canister and the mount include cooperating threaded portions which enable the canister to be threadably secured to the mount; the mount further including (i) a central flow passage communicating with the central cavity in the filter element, (ii) at least one other flow passage fluidly separate from the central flow passage and communicating with a peripheral flow area between the outer periphery of the element and the canister, and (iii) at least one threaded element projecting axially away from a first side of the mount, between the central flow passage and the periphery of the mount;
an annular first seal located around the central flow passage on the first side of the mount, between the central passage and the at least one other flow passage;
an annular second seal located toward the periphery of the mount, also on the first side;
in which the mount can be fixed to a manifold having first and second passages oriented to fluidly connect with the central flow passage and the at least one outer flow passage, and with the first and second seals providing a leak tight connection between the mount and a surface of the manifold.

The filter assembly includes a mount which facilitates attaching a filter canister to a manifold. The mount is relatively simple to manufacture, provides for a leak-tight connection between the canister and the manifold, and efficiently directs the fluid into and out of the filter assembly so as to minimize pressure drop.

Optionally, the mount includes an annular body with a central axial flow passage, and one or more outer axial flow passages formed radially outward from the central passage, between the central passage and the periphery of the mount. The outer flow passages can have an oblong or kidney shape, and extend arcuately around the mount. Annular seals are received in grooves formed on the manifold (outer) side of the mount. A first annular seal is located around the central passage, on the outer side of the mount between the central passage and the outer passages; while a second annular seal is located around the periphery of the mount, also on the outer side of the mount.

Optionally, the mount includes a pair of passages located off-centre in the mount. An annular seal can be located around each passage.

One or more through-bores can be provided between the central passage and the periphery of the mount, and can be located between adjacent outer flow passages. The through-bores can be dimensioned to receive threaded fasteners, such as screws or bolts, to fasten the mount to the manifold. The manifold can include corresponding threaded openings to receive the fasteners from the mount. A first opening, which can be an inlet or outlet, can be oriented with the central passage in the mount when the mount is assembled; while a second opening, which can also be an inlet or outlet, can be oriented with the outer passage(s) in the mount. When the fasteners are tightened down into the bores in the manifold, the seals on the outer surface of the mount can seal in a leak-tight manner against the surface of the manifold, to fluidly-separate the flow through the passages and openings and prevent fluid leakage.

Alternatively or in addition to the threaded fasteners, a threaded nipple can be provided on the mount surrounding the central flow passage and projecting axially outward from the manifold (exterior) side of the mount. The threaded nipple could be threaded into a corresponding threaded opening in the manifold to secure the mount to the manifold.

A nipple could also be provided on the filter (interior) side of the mount, which is received in a corresponding central opening in the end cap of the filter element. A seal or gasket can be carried by the element end cap or the nipple to create a leak-tight seal between the central passage in the mount and the central passage in the filter element end cap.

The periphery of the mount can include a threaded portion which can cooperate with corresponding threads on the distal open end of the canister to allow removable attachment of the canister to the mount. The threaded attachment of the canister to the mount can enable easy access to an element within the canister to replace the element when it becomes spent. The element can include an annular sealing feature which is captured between the periphery of the mount and the peripheral open end of the canister to provide a leak-tight connection between the canister and the mount.

The mount and the passages through the mount can be formed using any appropriate technique such as die-casting and/or machining.

As should be appreciated from the above, the present invention reduces the machining and forming steps for the manifold, reducing cost and effort. Also better performance can be achieved from a more open flow geometry from the manifold into the filter.

The invention is diagrammatically illustrated by way of example in the accompanying drawings, in which:
Figure 1 is a partially exploded view of a filter assembly;
Figure 2 is a cross-sectional view of the filter assembly;
Figure 3 is a perspective view of a mount for the filter assembly of Figure 1;
Figure 4 is a top plan view of the mount of Figure 3;
Figure 5 is a bottom plan view of the mount of Figure 3;
Figure 6 is a cross-sectional side view of the mount taken substantially along the plane defined by the lines 6-6 in Figure 5;
Figure 7 is an enlarged view of a portion of Figure 2;
Figure 8 is an exemplary manifold for the filter assembly of Figure 1.
Figure 9 is a side view of another embodiment of the mount for the filter assembly of Figure 1; and
Figure 10 is a cross-sectional side view of the mount of Figure 9, taken substantially along the plane defined by the lines 9-9 in Figure 10.

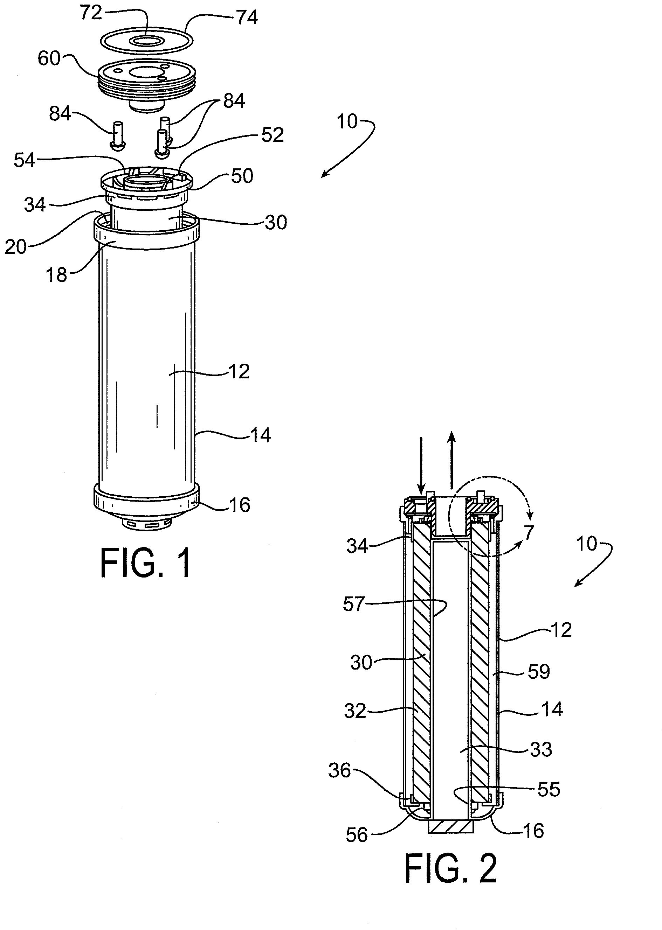

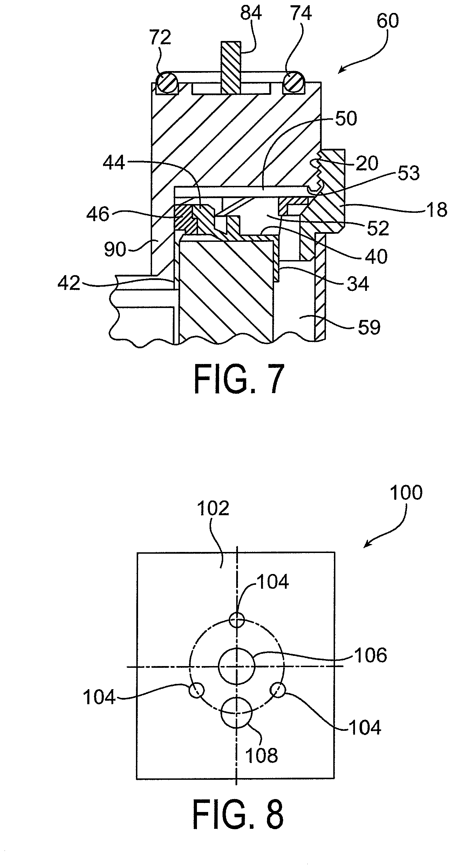

Referring to the drawings, Figures 1 and 2 show a filter assembly 10 which includes a cup-shaped, elongated, hollow canister 12 with cylindrical sidewalls 14 and an end wall 16 fixed in an appropriate manner to the sidewalls. The open, upper end of the canister (or bowl) 12 includes a ring or enlarged annular flange 18 with an internal threaded portion as at 20 (see also, Figure 7) adjacent the distal end of the canister. The canister can be formed of any material and in any manner appropriate for the particular application, as should be apparent to the skilled reader; for example, the canister can be formed from a drawn or otherwise formed metal, or from plastic.

A filter element 30 is located internally of the canister. Element 30 includes a ring of filtration media 32 circumscribing a central axis and defining an interior cavity 33, and has annular upper and lower end caps 34, 36, respectively, sealingly bonded to the ends of the media in an appropriate manner, such as with adhesive. Media ring 32 can also be formed of any material appropriate for the particular application, as should be apparent to those skilled in the art, for example the end caps can be formed of metal or plastic while the media can be formed of fibres, cellulose or any number of materials, in one or multiple layers. As also shown in Figure 7, upper end cap 34 includes an annular body portion 40 defining a central opening 42 around the central axis, with an annular flange 44 projecting a short distance axially away from the outer side of the end cap, and having an inner seal 46 either formed unitarily with the flange, or as a separate component such as an O-ring seal, supported within a channel or groove or otherwise held against the flange 44.

An annular sealing ring 50 is supported radially outward from the flange 44, such as being supported by support members or stanchions as at 52. Sealing ring 50 includes a peripheral sealing member 53 either formed unitarily with the sealing ring or as a separate component such as an O-ring seal, supported within a channel or groove or otherwise held by the sealing ring. Flow openings as at 54 (Figure 1) are formed between the stanchions 52, and direct flow received between the stanchions into a peripheral region 59 between the element and canister (or vice versa) when the element is located within the canister.

Lower end cap 36 likewise defines a central opening 55 around the central axis, and has an inner seal 56 either formed unitarily with the end cap, or as a separate component such as an O-ring seal, supported within a channel or groove or otherwise held by the end cap. Canister 12 can include a central perforated support tube 57 which is fixed to the bottom end cap 16 and projects axially upward along the central axis of the canister. Element 30 is located over the tube, with seal 57 on the lower end cap sealing toward the bottom end of the tube. When the element is so located, a peripheral annular region 59 is defined between the periphery of the element and the inside surface of the canister, to facilitate fluid flow along the length of the element, as will be described herein in more detail.

Further description on the configuration and structure of the canister 12, element 30 and end caps 34, 356, can be found in US-7771595.

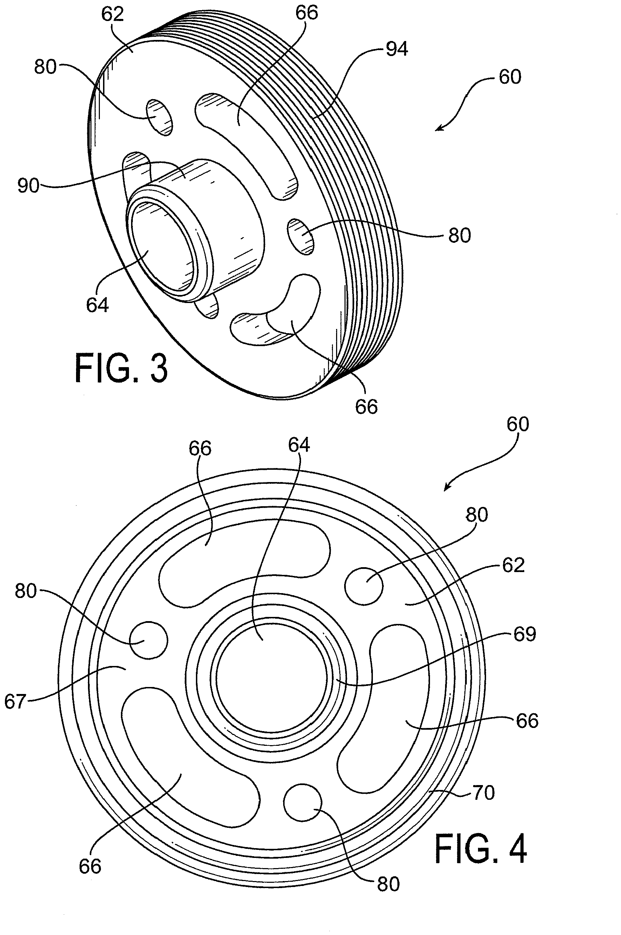

Referring now also to Figures 3 to 6, the filter assembly further includes a manifold mount, indicated generally at 60, for attaching the filter canister 12 to a manifold. As with the canister 12 and element 30, mount 60 can be formed of any material and using any technique appropriate for the particular application, for example the mount can be made from a die-cast metal, which can then be further machined if necessary.

The mount 60 includes an annular body 62, which in one embodiment includes a central axial flow passage 64, and one or more outer axial flow passages as at 66, formed radially outward from the central passage, between the central passage and the periphery of the mount. Three outer flow passages are illustrated, each equally-spaced from each other and extending arcuately around the mount. The outer passages have a generally oblong or kidney shape in cross-section and a generally constant dimension throughout the width of the mount. However, the number and geometry of the flow passages can vary depending upon the particular application. The outer passages can optionally open into a shallow annular recessed cavity 67 formed in the outer, substantially flat, side surface 68 of the mount. The annular cavity 67 enables fluid to pass easily through any of the passages 66 in the mount to the element from the outer side to the inner side with minimal pressure drop.

Annular seals are received in grooves 69, 70, formed in the outer side surface 68 of the mount. A first annular seal 72 (Figures 1, 7) is located in groove 69 around the central passage 64, on the outer side 68 of the mount between the central passage 64 and the outer passages 66 and inwardly bounding cavity 67. Seal 72 fluidly separates fluid in the central passage from fluid in the outer passages, when the mount is sealed against the underside of a manifold, as will be described below. A second annular seal 74 (Figures 1, 7) is located in groove 70 around the periphery of the mount, also on the outer side 68 of the mount, and outwardly bounding cavity 67, and prevents fluid leakage from the outer passages 66 exteriorly of the canister, as will also be described below.

In one embodiment, one or more through-bores as at 80 are provided between adjacent outer flow passages around the mount, although the through-bores could be located anywhere between the central passage 64 and the periphery of the mount. Through-bores 80 are dimensioned to closely receive threaded fasteners, such as screws or bolts 84 (Figure 1), to fasten the mount to the underside of the manifold as will be describe below.

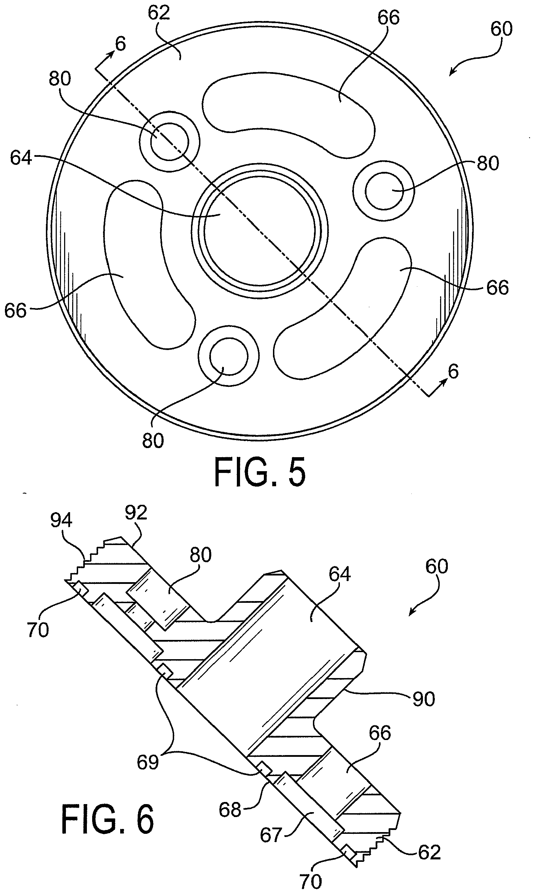

Referring again to Figure 6, the central passage 64 in the mount can include a first annular nipple 90, projecting axially from the filter (interior) side 92 of the mount, which is received in the corresponding central opening 42 (Figure 7) in the end cap of the filter element. Seal 46 in end cap 34 creates a leak-tight seal between the central passage in the mount and the central passage in the filter element end cap when the canister is assembled on to the mount.

As shown in Figures 3 and 6, the periphery of the mount includes a threaded exterior portion 94 which cooperates with the corresponding threads 20 on the distal open end of the canister to enable removable attachment of the canister to the mount. Alternatively, although not shown, the mount could include an annular skirt with internal threads, and the flange 18 on the canister could include external threads, to similarly attach the canister to the mount, which should be apparent to the skilled reader.

Referring now to Figure 8, a lower, substantially flat surface of a manifold 100 is indicated at 102, and includes corresponding threaded openings 104 located to receive the fasteners 84 from the mount when the mount is located against the surface of the manifold. A first opening 106, which can be an inlet or outlet, is oriented with the central passage 64 in the mount when the mount is so assembled; while a second opening 108, which can also be an inlet or outlet, is oriented so as to be circumferentially aligned with the outer passage(s) 66 in the mount. The passage(s) 66 in the mount are preferably at least as large as the passage 108 in the manifold, to reduce pressure drop across the mount. Annular seals 72 and 74 seal against the underside surface of the manifold when the fasteners are tightened down, and create a leak-tight fit between the manifold and the mount. Again, annular inner seal 72 is located centrally so as to prevent fluid leakage from fluid directed through passage 106 in the manifold and passage 64 in mount 60; while annular seal 74 is located to prevent fluid leakage from fluid directed through passage 108 in the manifold and passage 66 in mount 60.

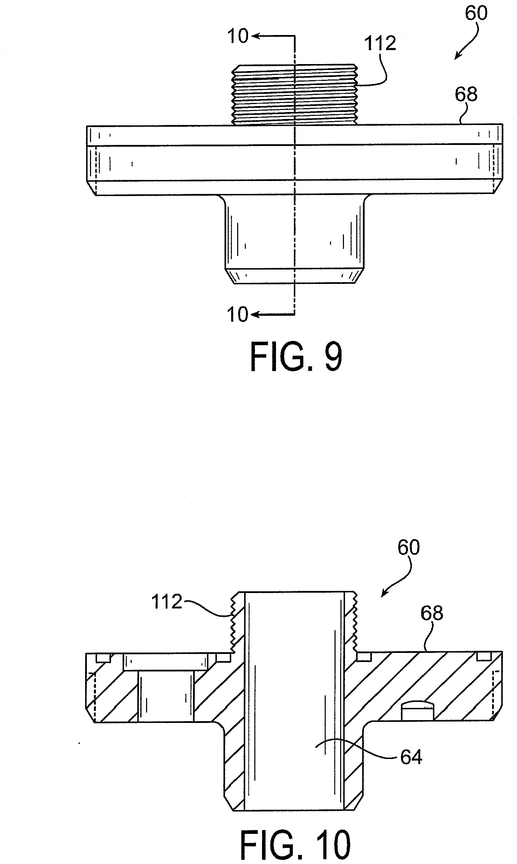

An alternative embodiment for the mount is shown in Figures 9 and 10, where mount 60 further includes a second, threaded nipple 112 projecting axially away from the outer side surface 68 of the mount, in surrounding relation to the central passage 64 and forming an extension thereof. Threaded nipple 112 can be received within passage 106 in the manifold, which would have corresponding threads in this embodiment to enable the mount to be securely fixed to the manifold. In such case, through-bores 80 and fasteners 84 may or may not be used between the mount and the manifold, depending on whether additional threaded elements are necessary due to case pressure.

While the mount is shown as attached to the underside surface of a manifold, it should be appreciated that the mount could be attached on other surfaces, such as a side surface, or an upper surface. In addition, while the mount is described above as including a central passage and one or more outer passages surrounding the central passage, it could of course be constructed with other geometries. For example, the mount could include a pair of passages located off-centre in the mount, and the manifold could have appropriate passages that would correspondingly align with such passages in the mount. In this case, the annular seals 72, 74 could each be located around a separate passage in the mount, and the end cap of the filter element could be modified appropriately to accept the particular flow paths defined through the mount and port the flow internally or externally of the media ring. Such modifications will be apparent to the skilled reader.

In any event, canister 12 can be screwed on to and off of the mount 60 to enable the element 30 to be removed from the canister when it is spent and replaced with a fresh element. As shown in Figures 2 and 7, the sealing ring 50 on the upper end cap of the element is received between the enlarged ring 18 of the canister and the interior side 92 of the mount to provide a leak-tight seal between the canister and the mount. As such, seal 53 on sealing ring 50, seal 46 on upper end cap 34, and seal 56 on lower end cap 36 separate the inlet and outlet flow paths through the canister. Flow can be directed through, for example, opening 108 in the manifold, be directed into the cavity 67 in the outer surface of the mount and through the outer flow passages 66 in the mount. The fluid then passes between the openings formed between the stanchions 52 supporting sealing ring 50, and into the peripheral region 59 between the filter element and the canister. Flow can then pass radially inward through the media where particulate and other contaminants are removed, and into the central cavity 33 of the element, where the filtered flow then passes axially upward through the central opening 42 and through the central passage 64 in the mount, and out to the central passage 106 in the manifold.

Alternatively, as should be apparent to the skilled reader, the flow direction can be reversed, where the flow exits central passage 106 in the manifold, goes radially outward through the element, and then is directed back through passage 108. Mount 60 functions in the same way in either case to allow the canister to be removably attached to the manifold and to facilitate flow through the mount while minimizing pressure drop.

It should be appreciated that the cavity 67 in the outer surface of the mount enables the mount to be located in any rotational orientation with respect to the manifold, and still enable fluid to pass easily and with minimal pressure drop from the passage 108 in the manifold to the outer passages 66 in the mount. Optionally, the mount can be oriented or indexed relative to the manifold so that only a single outer passage 66 is necessary, aligned with passage 108 in the manifold.

As should be apparent from the foregoing, the mount is relatively simple to manufacture as it has few openings which are easy to die-cast, machine or otherwise form, and provides for a leak-tight connection between the canister and the manifold. The mount efficiently directs the fluid into and out of the filter assembly so as to minimize pressure drop.

## Claims

1. A filter assembly (10), comprising:
(i) a canister (12) with an open end (18), (ii) a filter element (30) located within the canister (12) having a central cavity (33), and (iii) a manifold mount (60) for attaching the canister (12) to a manifold (100); in which the canister (12) and the mount (60) include cooperating threaded portions (20, 94) which enable the canister (12) to be threadably secured to the mount (60); the mount (60) further including (i) a central flow passage (64) communicating with the central cavity (33) in the filter element (30), (ii) at least one other flow passage (66) fluidly separate from the central flow passage (64) and communicating with a peripheral flow area (59) between the outer periphery of the element (30) and the canister (12), and (iii) at least one threaded element (84,112) projecting axially away from a first side (68) of the mount (60), between the central flow passage (64) and the periphery of the mount;
an annular first seal (72) located around the central flow passage (64) on the first side (68) of the mount (60), between the central passage (64) and the at least one other flow passage (66); and
an annular second seal (74) located toward the periphery of the mount (60), also on the first side (68);
in which the mount (60) can be fixed to a manifold (100) having first and second passages (106, 108) oriented to fluidly connect with the central flow passage (64) and the at least one outer flow passage (66), and with the first and second seals (72, 74) providing a leak tight connection between the mount (60) and a surface (102) of the manifold (100).

2. The filter assembly (10) as in claim 1, in which the open end (18) of the canister (12) includes an internal threaded portion (20), and the mount (60) includes a corresponding external threaded portion (94) around the periphery thereof which cooperates with the threaded portion (20) of the canister (12) to removably attach the canister (12) to the mount (60).

3. The filter assembly (10) as in either of claims 1 or 2, in which the mount (60) further includes a plurality of through-bores (80), between the central flow passage (64) and the periphery of the mount (60), and the at least one threaded element (84) comprises threaded fasteners (84) received within respective through-bores (80) and projecting axially away from the first side (68) of the mount (60).

4. The filter assembly (10) as in any of claims 1-3, in which the mount (60) includes plural outer axial flow passages (66) surrounding the central passage (64), and evenly spaced in an arcuate arrangement around the mount (60).

5. The filter assembly as in claim 4, in which the through-bores (80) are located between adjacent outer flow passages (66).

6. The filter assembly (10) as in either of claims 4 or 5, in which the mount (60) includes an annular recessed cavity (67) on the first side (68) of the mount (60), between the first seal (72) and the second seal (74), and the plural outer flow passages (66) open into the cavity (67).

7. The filter assembly (10) as in any of the claims 1-6, in which the mount (60) includes an annular nipple (90) projecting axially away from a second side (92) of the mount (60), and forming an extension of the central passage (64).

8. The filter assembly (10) as in claim 1, in which the threaded element (84, 112) comprises a threaded nipple (112), projecting axially away from the first side (68) of the mount (60), and forming an extension of the central passage (64).
